# EUROPEAN PATENT APPLICATION

(11) **EP 1 594 297 A1**
(43) Date of publication of application: **09.11.2005**
(21) Application number: 04291147.9
(22) Date of filing: 04.05.2004
(51) Int. Cl.: H04M 1/725

(54) **Multimedia communication system with a mobile handset coupled to a display device via a radio link**

(71) Applicant: ALCATEL, 75008 Paris (FR)
(72) Inventor: van Esbroeck, Wim, 9120 Melsele (BE)
(74) Representative: Narmon, Gisèle Marie Thérèse

(57) **Abstract**

A multimedia communication system comprising a mobile handset (1), e.g. a mobile telephone or a dictation apparatus, coupled to a multimedia display device (2), e.g. a printer or a screen, via a radio (3) to transmit information thereon. The handset and the display device are both adapted to operate with transmission protocols, such as e.g. the Bluetooth™ protocol, and the mobile telephone preferably operates according to the Global System Mobile [GSM] telephone protocol. Owing to the radio link and to the Bluetooth™ protocol, the information, e.g. voice, picture, ..., is directly transferred from the mobile handset to the multimedia display device, whereby the cost is low, whilst the transmission speed is high.

## Description

The present invention relates to a multimedia communication system with a mobile handset adapted to transfer information to a multimedia display device

Such a multimedia communication system wherein a mobile handset transfers information to a multimedia display device is generally known in the art. Therein, the information is first downloaded, i.e. transferred and stored, from the mobile handset into an intermediate device, such as a computer (PC), before it can be transmitted to the multimedia display device.

A problem with the known multimedia communication system is the necessary presence of an intermediate device.

An object of the present invention is to provide a multimedia communication system of the known type but wherein the information should go directly from the mobile handset to the multimedia display device.

According to the invention, this object is achieved due to the fact that the mobile device is adapted to directly transfer said information to the multimedia display device via a radio link.

The direct transfer of information from the mobile handset to the multimedia display device via the radio link has several advantages. For instance, the cost is reduced because an intermediate device, such as a PC, is no longer required, whilst the transmission speed is increased owing to the radio link.

In a preferred embodiment, the present invention is characterized in that said mobile handset is a mobile telephone set.

In this way, the field of applications of the present invention is enlarged, especially if, as preferred, said mobile handset operates according to the Global System Mobile telephone protocol.

Another characterizing embodiment of the present invention is that said multimedia display device is either a printer adapted to convert received information into printable characters, or a screen adapted to convert received information into displayable signs.

In this way, the present invention allows to printout or to display on screen any information directly transmitted by the mobile handset.

Again in a preferred embodiment, the present invention is characterized in that said radio link operates according to Bluetooth™ protocol.

Because the Bluetooth™ protocol is already well known in the art, the present multimedia communication system may be achieved at low cost.

This is especially true if, as preferred, said mobile handset is adapted to transfer said information according to Bluetooth™ protocol and said multimedia display device is adapted to receive said information according Bluetooth™ protocol.

In a variant characterizing embodiment of the present invention, said mobile handset is a dictation apparatus.

This dictation apparatus can thus also be directly coupled to a printer or to a screen with all the advantages thereof.

Further characterizing embodiments of the present multimedia communication system with direct print or display from a mobile handset or dictation apparatus are mentioned in the appended claims.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

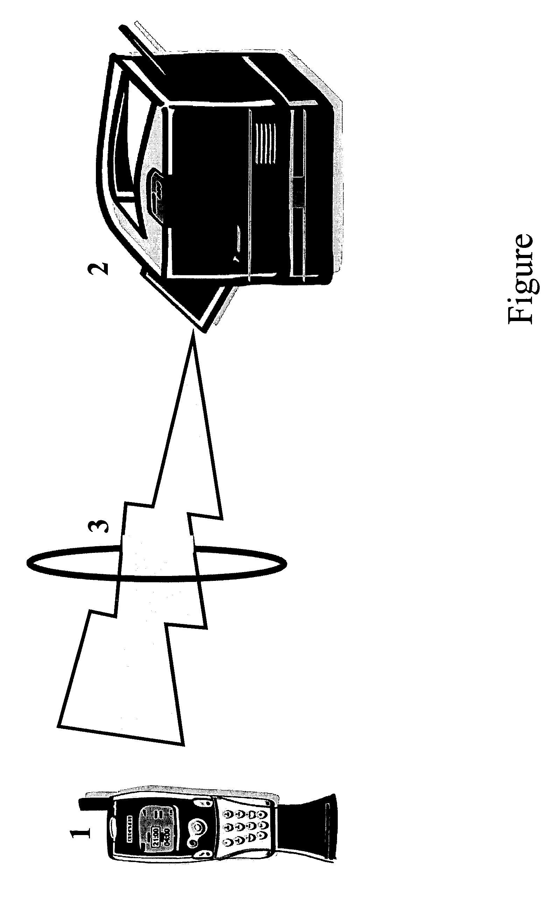

The above and other objects and features of the invention will become more apparent and the invention itself will be best understood by referring to the following description of an embodiment taken in conjunction with the accompanying drawing wherein the figure represents a direct print/display from a mobile handset or dictation apparatus according to the invention.

The multimedia communication system shown at the figure comprises a mobile handset 1 coupled to a multimedia display device 2 via a radio 3 to transmit information thereon. On the one hand, the mobile handset 1 may for instance be a mobile telephone handset or a dictation apparatus. On the other hand, the multimedia display device 2 may for instance be a printer or a screen.

In order to communicate via the radio link 3, the mobile handset 1 and the multimedia display device 2 both include means adapted to operate with transmission protocols, such as for instance the known Bluetooth™ protocol.

If the mobile handset 1 is a mobile telephone handset, it will operate preferably according to the Global System Mobile telephone protocol.

In case the transmitted information is voice, the mobile handset 1 is provided with speech recognition means adapted to convert this voice into information under the form of data prior to transmit it on the radio link 3.

In case the transmitted information is a picture, the mobile handset 1 is provided with means adapted to convert this picture into information under the form of data prior to transmit it on the radio link 3.

If the multimedia display device is a printer, it is adapted to convert the received data into printable characters, and if the multimedia display device is a screen, it is adapted to convert received data into displayable signs.

The mobile device is adapted to directly transfer said information to the multimedia display device via a radio link.

Owing to the radio link 3 and to the Bluetooth™ protocol, the information is directly transferred from the mobile handset 1 to the multimedia display device 2. As a consequence, the cost is relatively low, whilst the transmission speed is relatively high.

If, as mentioned above, in a variant embodiment of the invention, the mobile handset 1 is a dictation apparatus, it can also be directly coupled to a printer or to a screen.

In case of voice recording, the mobile handset 1, that is either a mobile telephone or a dictation apparatus, is provided with a Speech Recognition feature adapted to convert the voice into information under the form of data prior to transmit it on the radio link 3.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. A multimedia communication system with a mobile handset (1) adapted to transfer information to a multimedia display device (2),
***characterized in that*** the mobile device (1) is adapted to directly transfer said information to the multimedia display device (2) via a radio link (3).

2. The Multimedia communication system according to claim 1,
***characterized in that*** said mobile handset (1) is a mobile telephone set.

3. The Multimedia communication system according to claim 2,
***characterized in that*** said mobile handset (1) operates according to the Global System Mobile telephone protocol.

4. The Multimedia communication system according to claim 1,
***characterized in that*** said multimedia display device (2) is a printer adapted to convert received information into printable characters.

5. The Multimedia communication system according to claim 1,
***characterized in that*** said multimedia display device (2) is a screen adapted to convert received information into displayable signs.

6. The Multimedia communication system according to claim 1,
***characterized in that*** said radio link (3) operates according to Bluetooth™ protocol.

7. The Multimedia communication system according to claim 6,
***characterized in that*** said mobile handset (1) is adapted to transfer said information according to Bluetooth™ protocol,
***and in that*** said multimedia display device (2) is adapted to receive said information according Bluetooth™ protocol.

8. The Multimedia communication system according to claim 1,
***characterized in that*** said information is voice,
***and in that*** the mobile handset (1) is provided with speech recognition means adapted to convert said voice into data.

9. The Multimedia communication system according to claim 1,
***characterized in that*** said information is a picture,
***and in that*** the mobile handset (1) is provided with means adapted to convert said picture into data.

10. The Multimedia communication system according to claim 1,
***characterized in that*** said mobile handset (1) is a dictation apparatus.
